# EUROPEAN PATENT APPLICATION

(11) **EP 4 617 226 A1**
(43) Date of publication of application: **17.09.2025**
(21) Application number: 25163510.8
(22) Date of filing: 13.03.2025
(51) Int. Cl.: B67B 7/46, A47J 43/28

(54) **CAN OPENING AND DRAINING DEVICE AND METHOD FOR DEVICE OPERATION**

(30) Priority: 13.03.2024 US 202463564579 P
(71) Applicant: Hamel Innovations LLC, Forest Grove, OR 97116 (US); Pacific University, Forest Grove, OR 97716 (US)
(72) Inventor: HAMEL, Justin, West Sacramento, 95691 (US); SORIA, Juan Andres, Hillsboro, 97123 (US)
(74) Representative: Maikowski & Ninnemann Patentanwälte Partnerschaft mbB

(57) **Abstract**

Devices (100, 1200) and methods for can opening and draining. In one example, the can opening and draining device (100) includes a plunger (104) with a lower section (120) that extends from an upper body (118) and a base (102) with an opening (134). In the can opening and draining device (100), the lower section (120) is configured to mate with the opening (134) in the base (102) and the base (102) includes a blade (210) which is coupled to an interior (212) of the base (102). The base (102) further includes a drain opening (110) that extends through a wall (112) of the base (102).

## Description

### Cross-Reference to Related Application

The present application claims priority to U.S. Provisional Application No. 63/564,579, entitled "CAN OPENING AND DRAINING DEVICE AND METHOD FOR DEVICE OPERATION", and filed on March 13, 2024. The entire contents of the above-listed application are hereby incorporated by reference for all purposes.

### Field

The present description relates generally to a can device for efficiently opening a can, draining liquid from the can, and removing a can lid.

### Background/Summary

Metal cans are used to store a variety of contents including food, beverages, and other goods. Certain metal cans are designed to be opened by cutting through the lid. To that end, can opening devices are used to separate the lid from the base of the can.

US 7,926,137 B2 to Walters-Olaru discloses a can opener, a turnkey press, and a lid remover. Walters-Olaru's system includes doors and a base that surround and secure the can in a desired position. The can opener is mounted to one of the doors and the turnkey press includes an arch that mates with door hinges and includes a rod that threads into a bushing which is mounted to the arch above the can. Other can opening devices have lacked can draining functionality, leading to a messy process of separating liquids from solid contents of the can. Attempts have been made to manufacture distinct devices that strain or otherwise separate liquids from the contents of the can after a can opener has been used to cut through and remove the lid.

The inventors have recognized several drawbacks with Walters-Olaru's system and other can opening devices. For instance, Walters-Olaru's system is bulky and cumbersome due to the arch, the walls, and the lower portion of the system. Consequently, storage of the system may be difficult, particularly in space constrained cabinetry, drawers, and the like. Additionally, Walters-Olaru's system and other can opening devices leave the cut edge of the can lid exposed, thereby increasing injury risk to the user. The abovementioned straining devices and press devices, which are separate from can openers, demand the removal of the lid which is cut by the can opener, again leaving jagged edges exposed which increases the likelihood of user injury. Additionally, press devices can experience liquid overflow and strainer devices may experience clogging or loss of contents in the can due to strainer holes being improperly sized in relation the size of the can's contents.

To overcome at least a portion of the aforementioned challenges, a can opening and draining device is provided that includes a plunger with a lower section that extends from an upper body. The can opening and draining device further includes a base with an opening. In the can opening and draining device, the lower section mates with the opening in the base. Further in the can opening and draining device, the base includes a blade which is coupled (e.g., removably coupled) to an interior of the base. The base further includes a drain opening that extends through a wall of the base. In this way, the can opening and draining device provides effective can opening and liquid draining functionality with a decreased risk of cuts or other injuries that result from unwanted user interaction with the jagged edges of the can and lid.

In one example, in the can opening and draining device a cutting edge of the blade may be recessed from a lower lip of the base. In this way, the chance of the user undesirably interacting with the blade is decreased.

Further in one example, the base may include a chamfered edge that is configured to wrap around a flared upper section of a can. In such an example, a polymeric ring (e.g., a silicone ring) may extend around an interior of the base that above the chamfered edge. In this way, a liquid tight seal is able to be formed between the base and the can to enable the can to be effectively drained of liquid with less mess. Further, the chamfered edge allows the can opening and draining device to be securely attached to the can while the can lid is cut, enabling the lid to be quickly and more smoothly cut.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### Brief Description of the Drawings

FIGS. 1A-1B show an assembled view and an exploded view of an exemplary can opening and draining device, respectively.
FIGS. 2A-2B show cross-sectional views of the can opening and draining device, depicted in FIG. 1A, in a cutting configuration and a draining configuration, respectively.
FIG. 3A shows a detailed cross-sectional view of a base in the can opening and draining device, depicted in FIG. 1A.
FIG. 3B shows a detail cross-sectional view of the attachment between the base of the can opening and draining device, depicted in FIG. 1A, and a can.
FIGS. 4A-4C show different views of the base in the can opening and draining device.
FIGS. 5A-5B show different views of a plunger in the can opening and draining device.
FIG. 6A shows the can opening and draining device in a lid removal configuration after the lid has been cut and separated from a base of the can.
FIG. 6B shows the can opening and draining device in a lid disposal configuration.
FIG. 7 shows a plug for the can opening and draining device.
FIGS. 8-10B show the plug, depicted in FIG. 7, mated with the base of the can opening and draining device.
FIGS. 11A-11B show another example of a base.
FIG. 12 shows different views of another example of a base.
FIG. 13 shows a method for operation of a can opening and draining device.

### Detailed Description

The following description relates to a can opening and draining device that functions to cut through a lid of a can to separate the lid from the can, press down on the lid once separated to condense the solids in the can and allow for effective liquid draining, and pour the separated liquid through an opening in the device. The can opening and draining device may further include a plug which seals the opening in the base, to further expand the device's functionality, in one example. The device is additionally configured to efficiently remove the lid for disposal after the liquids are drained from the can with a decreased chance of user injury and disposing of the liquids in an unwanted manner.

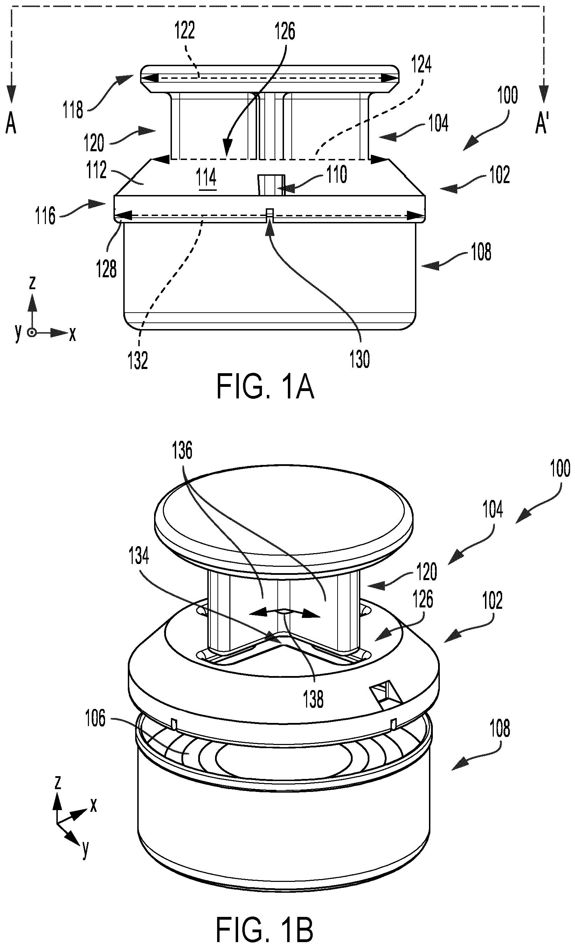

FIG. 1A shows an example of a can opening and draining device 100 which includes a base 102 and a plunger 104 that mates with the base during draining operation that is discussed in greater detail herein. The can opening and draining device 100 is configured to quickly, efficiently, and safely cut through a lid 106 of a can 108 (shown in FIG. 1B), drain liquids from the can, and safely remove the lid from the can for disposal.

To achieve the liquid draining functionality, the base 102 includes a drain 110 that extends through a wall 112 of the base, as shown in FIG. 1A. To elaborate, in the illustrated example, the drain 110 is positioned in an angled section 114 of the base 102. However, in alternate examples, the drain may be positioned in another suitable location. The angled section 114 of the base is positioned above a lower section 116 of the base 102 which includes features for securely attaching the base to a can which are expanded upon herein.

The plunger 104 includes an upper body 118 and a lower section 120 that extends from the upper body. A diameter 122 of the upper body 118 of the plunger 104 may be equal to or greater than a diameter 124 of a central section 126 of the base 102, in one example. In this way, the plunger 104 is sized to be easily gripped by the user. However, the plunger may be shaped and/or sized in another suitable manner, in alternate examples.

The base 102 includes a lip 128 which circumferentially extends around the can 108 when the base 102 is pressed down onto the can to puncture the can's lid. The lip 128 extends downward from the angled section 114 of the base 102 in the illustrated example.

The base 102 additionally includes stress relief slits 130 in the lip 128, in the illustrated example. These stress relief slits 130 allow the base to be installed on the rim of the can with increased stability and achieve a liquid tight seal, if desired. To elaborate, the stress relief slits 130 enable a diameter 132 of the lip 128 of the base to be temporarily expanded when the base is pressed over the flared lip of the can 108. Specifically, the base 102 may be friction fit with the can 108. Installation of the base on the can and the formation of the liquid tight seal between the device and the can is expanded on herein. However, other contours of the base may be used in other examples, such as a base which is constructed without stress relief slits and with a material that exhibits greater compliance, for instance.

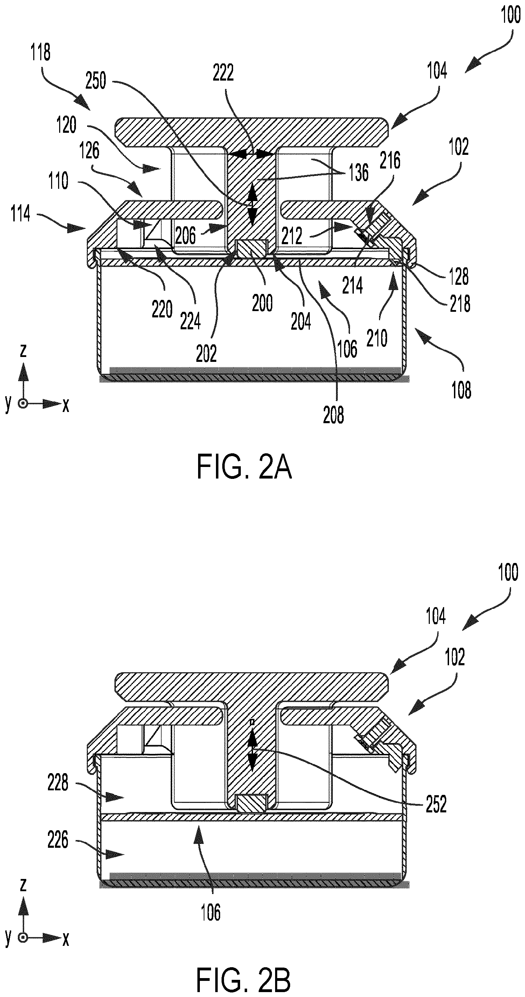

Cutting plane A-A' denotes the cross-sectional view depicted in FIG. 2B. The other cross-sectional views depicted in FIGS. 2B-3B are taken along cutting planes in a similar location to the cutting plane A-A' depicted in FIG. 1A.

An axis system is provided in FIG. 1A, as well as FIGS. 1B-12, for reference. The z-axis may be a vertical axis (e.g., parallel to a gravitational axis), the x-axis may be a lateral axis (e.g., horizontal axis), and/or the y-axis may be a longitudinal axis. However, alternate orientations of the axes may be used, in other examples.

FIG. 1B shows the can opening and draining device 100 in a configuration where the plunger 104 is separated from the base 102. The view of the of the can opening and draining device depicted in FIG. 1B reveals an opening 134 in the base 102. Specifically, the opening 134 is located in a central section 126 of the base 102, in the illustrated example. However, the opening may be located in another suitable positon in alternate embodiments.

The lower section 120 of the plunger 104 includes two walls 136 which intersect one another, in the illustrated example. Thus, an angle 138 is formed between the walls 136. The angle 138 may be 90°. However, in other examples, the angle 138 may be less than or greater than 90°.

The opening 134 is sized and profiled to mate with the lower section 120 of the plunger 104 which enables the plunger to press down on the lid (after the can has been punctured via a blade in the base) and subsequently apply pressure to the lid once it is separated from the base of the can to allow the solid contents in the can to be consolidated. Can cutting operation using the base is elaborated upon herein.

The opening 134 has a cross shape (in the x-y plane), similar to the shape of the intersecting walls 136, in the illustrated example. However, other contours between the mated sections of the plunger and the base have been contemplated. For instance, the two dimensional shape of the opening 134 as viewed from above (in the x-y plane) may be in the form of a rectangle or other polygonal shape, a circle, a star, and the like.

The plunger 104 and the base 102 may be constructed out of one or more polymeric materials (e.g., plastics such as polyethylene, silicone, etc.), metal, combinations thereof, and the like. The other components in the devices described herein may be constructed out of similar materials.

FIG. 2A shows a cross-sectional view of the can opening and draining device 100 in a cutting configuration after puncturing of the can's lid but prior to completely cutting through the lid to separate the lid from the can.

The plunger 104 with the upper body 118 and the lower section 120 as well as the base 102 are again shown in FIG. 2A. A magnet 200 is arranged in a recess 202 of a lower side 204 of the plunger 104 in the illustrated example. To elaborate, the magnet 200 may be located at the intersection 206 between the walls 136 of the plunger. Further, the magnet 200 is shown in face sharing contact with an upper surface 208 of the lid 106. The magnet allows the lid of the can to be efficiently removed from the body of the can with a decreased chance of the user undesirably interacting with the edge of the lid and cutting or otherwise injuring themselves. However, in other examples, the magnet may be omitted from the device. The magnet 200 may be press-fit, glued, mechanically attached, combinations thereof, and the like to the plunger 104. To elaborate, the magnet may be removably attached to the plunger via a fastener. In other examples, the magnet may be glued and/or press fit into the plunger or the plunger may be molded around the magnet.

A blade 210 is shown coupled to an interior 212 of the base 102. In particular, in the illustrated example, the blade 210 is removably coupled to the base 102 using a set screw 214 which extends through an opening in the blade and threads into a hole 216 in the base. In this way, the blade 210 in the can opening and draining device 100 may be designed for efficiently replacement, enabling the device's longevity to be increased. Alternatively, the blade may be fixedly coupled to the base or formed therewith to simplify device manufacturing.

One of the cutting edges 218 of the blade 210 is shown piercing the can lid 106 in FIG. 2A. The blade 210 may be constructed out of a metal such as steel (e.g., stainless steel), for instance. Further, the lip 128 of the base 102 circumferentially surrounds the flared section of the can 108. The construction of the base 102 in relation to the blade 210 and specifically a stepped surface 220 along the interior 212 of the base 102 allows for the lid 106 to be pierced by the blade and maintain a positioned along the z-axis which allows the blade to be in a precise position that enables the blade to cut through the lid when the base is rotated in relation to the can 108.

The central section 126, the angled section 114, and the lip 128 of the base 102 are again shown in FIG. 2A, although other base profiles have been contemplated. The walls 136 of the plunger 104 are additionally shown in FIG. 2A. As previously discussed, the walls 136 perpendicularly intersect in the y-x plane, in the illustrated example. However, other plunger designs have been contemplated, as noted above. The walls 136, in the illustrated example, have a substantially constant width 222 along the z-axis. This enable the plunger to be pressed straight downward with regard to the base.

An interior opening 224 of the drain 110 is further depicted in FIG. 2A. The interior opening 224 may have curved surfaces to allow the liquid to smoothly drain from the can in a desired manner, to decrease the likelihood of spilling the liquid in an unwanted manner while draining liquid from the can 108.

Once the lid 106 is punctured by the blade 210, the base 102 is able to be rotated by the user to implement a circular cut of the lid to separate the lid from the body of the can 108. After the lid is separated from the body of the can, the plunger 104 is able to be depressed by the user to move the lid 106 downward as shown in FIG. 2B. Pressing the lid downward in this manner allows the solids in the can to be consolidated in the area 226 below the depressed lid and a portion of the liquids to be contained in the area 228 above the lid for subsequent draining operation. In this way, the can opening and draining device 100 is able to effectively and efficiently separate the liquid from the solid can contents, if desired. It will be understood that the plunger 104 may be moved in opposing directions along the axis 252.

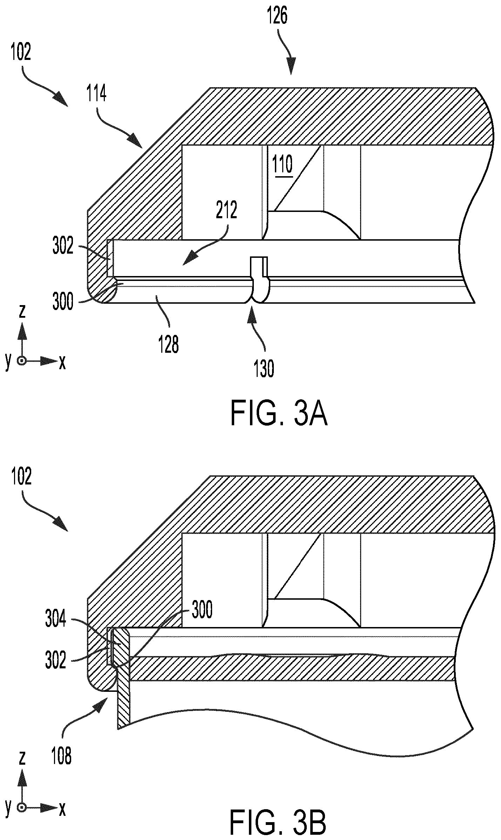

FIG. 3A shows a cross-sectional view of the base 102 which shows the drain 110, the stress relief slits 130, and the lip 128. The base 102 includes a chamfered edge 300 at the interior 212 which circumferentially extends around the base, in the illustrated example. The central section 126 and the angled section 114 of the base are again shown. A ring 302 extends circumferentially extends around the interior 212 of the base 102. The ring 302 may be constructed out of silicone or another suitable polymeric material. However, other contours of the base have been contemplated.

FIG. 3B shows the chamfered edge 300 of the base 102 wrapping around the flared section 304 of the can 108. This locks the base 102 on to the can 108 until the base is pulled off the can in an upwards direction (e.g., along the z-axis) with force. In this way, the likelihood of the base unexpectedly decoupling from the can is reduced. As illustrated in FIG. 3B, the ring 302 is in sealing contact with the flared section 304 of the can 108 to provide a liquid tight seal, to reduce the chance of the liquid undesirably spilling from the can.

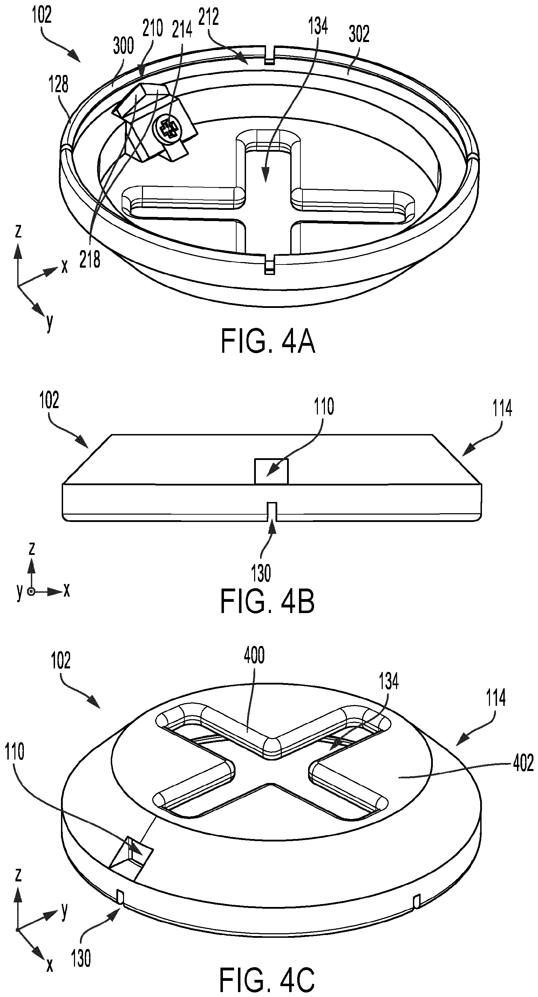

FIGS. 4A-4C show different views of the base 102. FIG. 4A specifically illustrates the lip 128, the chamfered edge 300, the blade 210, the set screw 214, the ring 302, and the opening 134. The ring 302 circumferentially extends around the interior 212 of the base 102, as previously discussed. The blade 210 is double sided in the illustrated example. In other words, the blade 210 has two cutting edges 218 that are angled with regard to one another. In this way, the base 102 is able to be rotated in either direction to cut the lid off of the can. Specifically, the base may be rotated in opposing directions about an axis 250. However, in other examples, the base may include a single sided blade which however constrains the base to opening the can solely by rotating the base in one direction with regard to the can.

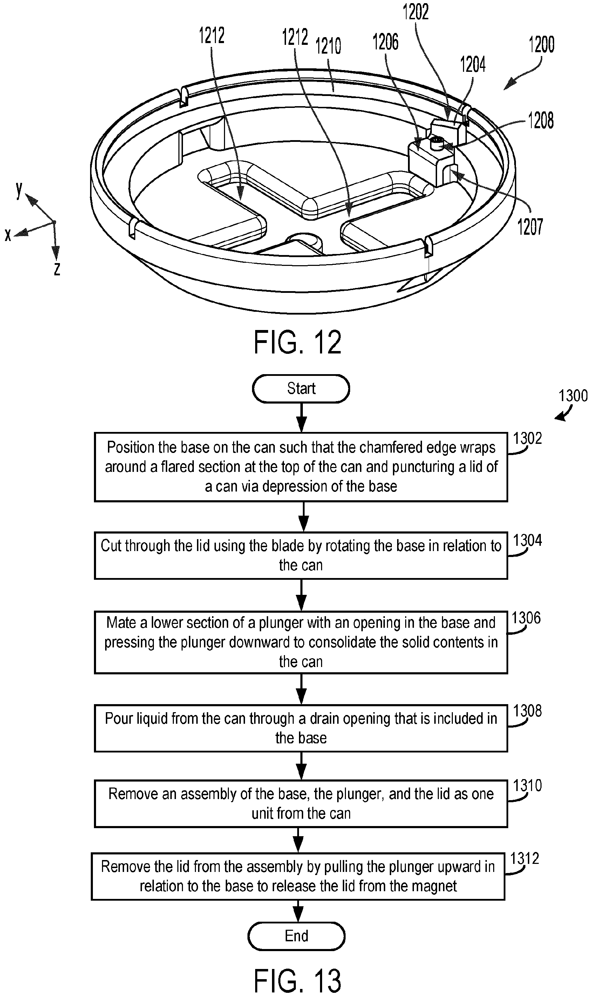

FIG. 12 shows another example of a base 1200 which includes a blade 1202 that is removably coupled to the base 1200 via a set screw. The blade 1202, shown in FIG. 12, includes a single cutting surface 1204. The blade 1202 includes a stepped surface 1206 with a step screw 1208 that extends therethrough, in the illustrated example. The stepped surface 1206 contacts a stepped surface 1207 in the base 1200. In this way, the blade 1202 may be securely and removably coupled to the base 1200. Further, a ring 1210 again extends circumferentially extends around the interior of the base 1200. Additionally, the blade 1202 may be radially aligned with one of the openings 1212. However, other blade positions are possible. The openings 1212 again symmetrically intersect to form a cross shape.

FIGS. 4B and 4C show the drain 110 and the stress relief slits 130 in the base 102. The drain 110 is specifically located in the angled section 114 of the base in the illustrated example. However, the drain may be positioned in alternate locations in different embodiments of the base. The opening 134 in the base 102 is additionally shown in FIG. 4C. As previously discussed, the openings 134 is cross-shaped in the illustrated example. Edges 400 of the openings 134 may be rounded (e.g., filleted). Further, the openings 134 may perpendicularly intersect one another in the x-y plane. In this way, openings 134 may have symmetry about multiple lines in the x-y plane which allows the sections 402 that is arranged between the openings to be equivalently sized to reduce the chance of undesirable flexion of these sections of the base. However, alternate arrangements and contours of the openings in the base have been contemplated, as previously discussed.

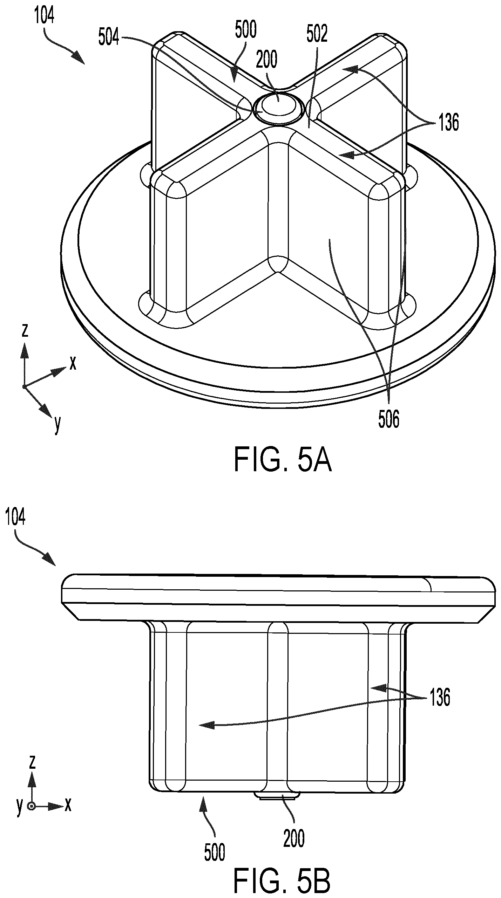

FIGS. 5A and 5B show different views of the plunger 104. The magnet 200 and the walls 136 of the plunger 104 are again shown. The magnet 200 extends below (with regard to the z-axis) a lower side 500 of the walls 136, in the illustrated example, to enable the magnet to be in face sharing contact with the lid of the can when the plunger is mate with the base. However, in other examples, the magnet may be flush with lower surfaces 502 of the walls 136. Further, the magnet 200 may have rounded edges 504. Sides 506 of the walls 136 are vertically aligned in the illustrated example. In this way, the plunger may be pushed vertically downward through the base. To elaborate, the sides 506 of each of the walls 136 may be perpendicular to one another.

FIG. 5B specifically shows the magnet 200 extending slightly below a lower side 500 of the walls 136 to allow the magnet to make contact with the lid such that the lid is able to be magnetically attached to thereto when the base and plunger are removed from the base of the can, after the lid is separated from the base.

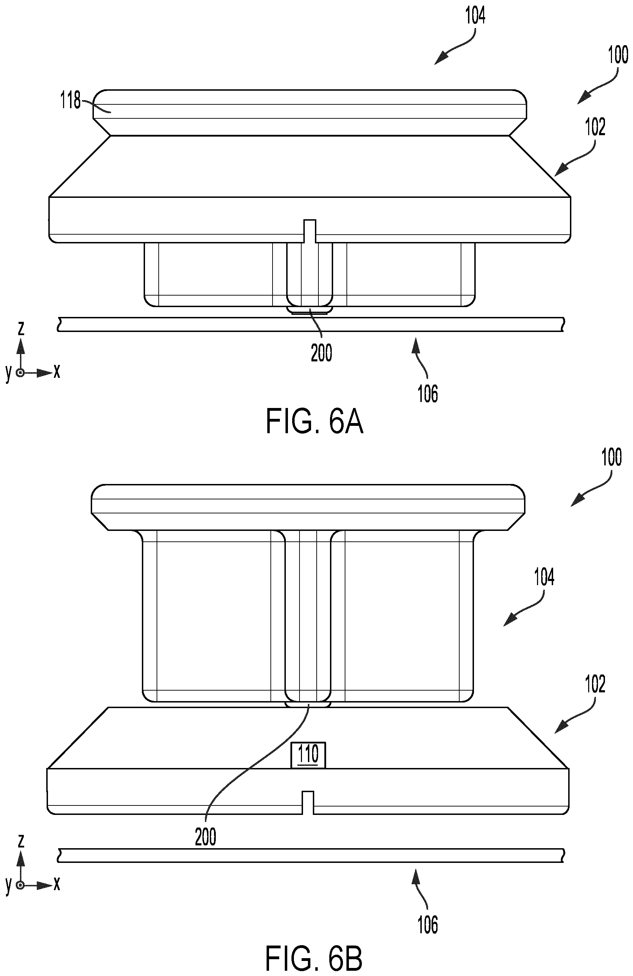

FIGS. 6A and 6B show a removal sequence of the can lid 106 using the can opening and draining device 100. As shown in FIG. 6A, the base 102, the plunger 104, and the lid 106 have been removed from the base of the can. The lid 106 is magnetically attached to the magnet 200 in the plunger 104 in FIG. 6A. In this way, when the base 102 and and the plunger 104 is lifted off of the can, the magnet pulls the lid of the can off of the base of the can. As a result, the solid contents remain in the can with much of the liquid drained from the can using the drain 110 (shown in FIG. 6B) in the base, if desired.

Further, as shown in FIG. 6A, the upper body 118 of the plunger 104 is in contact (e.g., bottomed out) on the base 102. In other words, the plunger 104 is at its lowest vertical position (e.g., along the z-axis) with regard to the base 102. As such, the lid 106 is positioned below the blade in the base 102.

In FIG. 6B, the plunger 104 has been moved vertically by the user with regard to the base 102. This vertical movement of the plunger allows the lid 106 to be separated from the plunger 104 by discontinuing the magnetic attachment between the lid 106 and the magnet 200. Thus, the magnet 200 is disengaged from the lid. It will be appreciated that the user may separate the lid 106 from the plunger to expel the lid into a trash bin, a recycling can, and the like. In this way, the lid 106 is able to be expelled from the plunger 104 without the user directly contacting the lid, if desired. Consequently, the chance of the user cutting or otherwise injuring themselves is reduced.

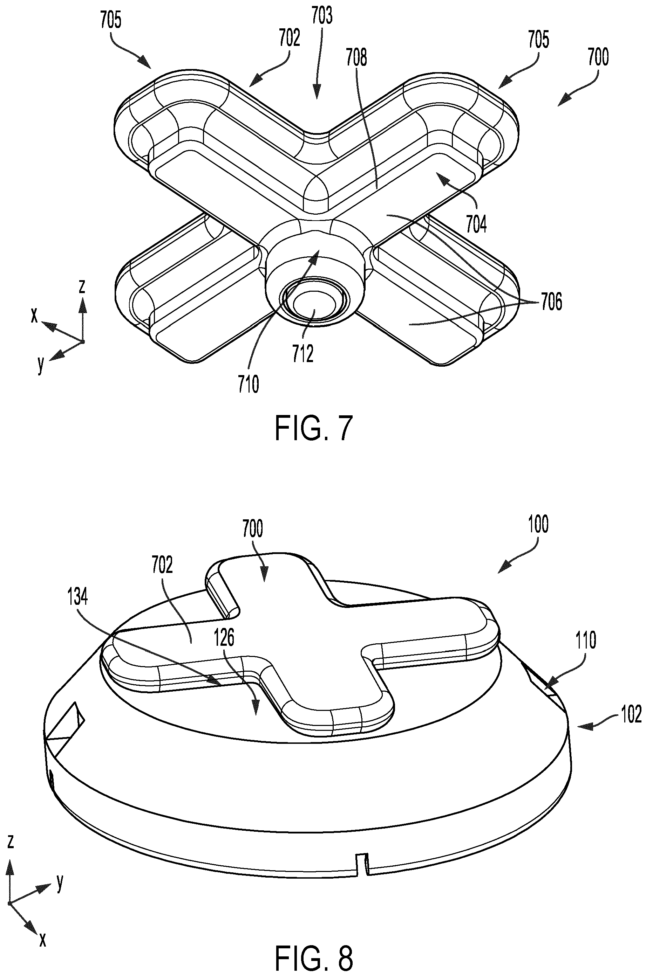

FIG. 7 shows an illustration of a plug 700 that may be included in the can opening and draining device 100 described above with regard to FIGS. 1A-6B. It will be understood that both the plunger 104 (shown in FIGS. 5A-5B) and the plug 700 may be included the can opening and draining device. To elaborate, the plunger 104, the plug 700, and the base 102 (shown in FIGS. 4A-4C) may be packaged as a kit for the user which allows the functionality of the device to be expanded. However, in other examples, the can opening and draining device 100 may include the plunger 104 and the base 102 (shown in FIGS. 1A-6B) or the plug 700 (shown in FIG. 7) and the base. The plug 700 may be constructed out of rubber or another suitable polymeric material that allows the plug 700 to form a liquid tight seal with the opening in the base.

As depicted in FIG. 7, the plug 700 includes an upper section 702 and a lower section 704 that extends downward from the upper section. The lower section 704 includes two walls 706 which intersect one another, similar to the plunger described herein. However, the walls 706 in the plug 700 has a shorter vertical height than the walls in the plunger (in relation to the z-axis). Further, the upper section 702 includes gaps 703 that is positioned between portions 705 of the upper section 702. In this way, the upper section may be constructed with less material than plugs where the gaps are filled in with material. The portions 705 are therefore arranged in a cross shape where they intersect one another. However, other plug geometries are possible, as previously discussed.

The walls 706 may have a curved edge 708 to allows the plug to smoothly mate with the base. The plug 700 may further include a protrusion 710 which is centrally located at the intersection of the walls 706. The protrusion 710 (e.g., cylindrical protrusion) may have a circular cross-section in the x-y plane. Further, the protrusion 710 is positioned at the intersection of the walls 706, in the illustrated example. The plug 700 may further include a lower protrusion 712 that extends vertically downward (with regard to the z-axis) in the illustrated example. However, other plug contours have been contemplated.

FIG. 8 shows the plug 700 mated with the opening 134 of the base 102. Therefore, FIG. 8 shows the can opening and draining device 100 in a plugged configuration where a liquid tight interface is formed between the plug 700 and the base 102 to enable the chance of unwanted liquid leakage from the assembly to be drastically reduced. To elaborate, the upper section 702 is contacting the central section 126 of the base 102 and the lower section 704 (shown in FIG. 7) is mated with the opening of the base 102 such that a liquid tight seal is formed. In this way, liquid is able to be expelled from the drain 110 by the user. As previously indicated, the upper section 702 of the plug 700 takes the form of a cross shape, in the illustrated example. However, the upper section of the plug may have another suitable shape, in alternate embodiments, as discussed above.

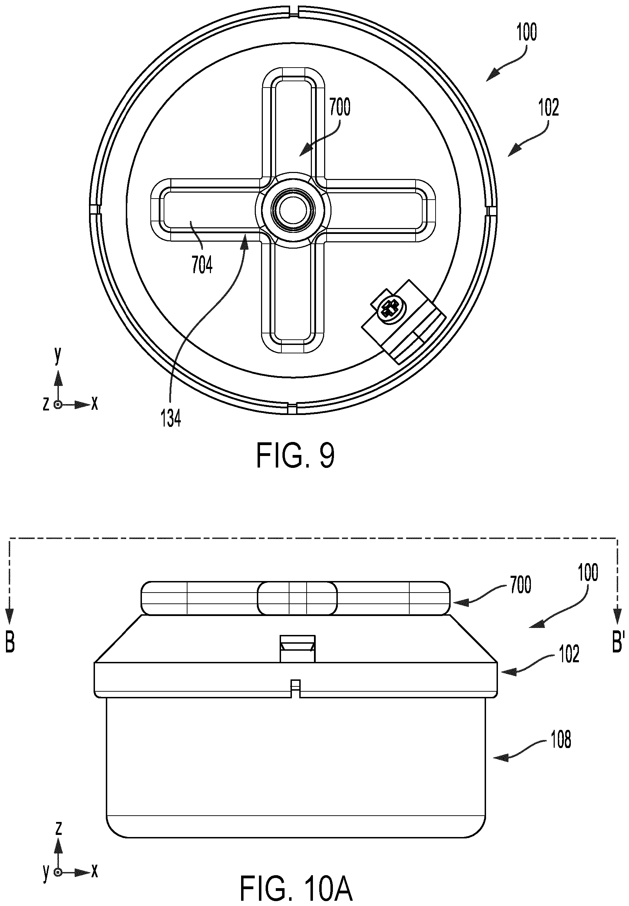

FIG. 9 shows a bottom view of the base 102 with the plug 700 mated therewith. To elaborate, the lower section 704 of the plug 700 is mated with the opening 134 in the base 102. In this way, a liquid tight seal is formed, as indicated above.

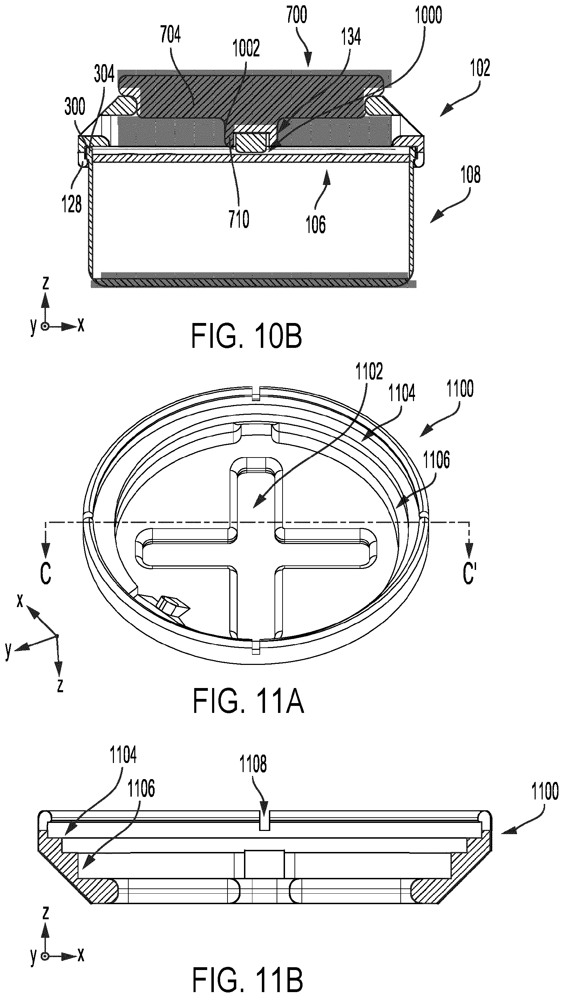

FIG. 10A shows a side view of the assembly of the plug 700 and the base 102 of the can opening and draining device 100 coupled to the can 108. To expound, the base 102 is pressed onto the can. Cutting plane B-B' denotes the cross-sectional view depicted in FIG. 10B.

As depicted in FIG. 10B, the lip 128 and specifically the chamfered edge 300 of the base 102 in the can opening and draining device 100 is contacting the flared section 304 of the can 108. As shown, a gap 1000 is formed between the protrusion 710 of the plug 700 and the lid 106 to prevent the plug from exerting downward force on the lid when installed. The seal 1002 between the walls 706 of the plug 700 and the opening 134 in the base 102 is further depicted in FIG. 10B.

FIG. 11A shows another example of a base 1100 which again includes an opening 1102 which is profiled to mate with the plunger and the plug described herein. However, the base 1100 includes a first stepped surface 1104 and a second stepped surface 1106 which is positioned radially inward from the first stepped surface. Further, the stepped surfaces 1104 and 1106 have differing height (in relation to the z-axis). In this way, the base 1100 is able to fit cans of different sizes, thereby expanding the device's applicability. The blade in the base 1100 may be adjustable such that is can be moved to align with the stepped surfaces 1104 and 1106 in different positions such that it is able to pierce lids of the differently sized cans. The stepped surfaces may specifically be horizontally aligned (i.e., parallel to the x-y plane). Cutting plane C-C' denotes the cross-sectional view depicted in FIG. 11B. It will be appreciated that the base 1100 may be used in conjunction with the plunger and/or the plug described above with regard to FIGS. 1A-10B.

FIG. 11B shows another view of the base 1100 with the first stepped surface 1104 and the second stepped surface 1106. The second stepped surface 1106 is shown positioned vertically below the first stepped surface 1104 with regard to the z-axis, as discussed above. The base 1100 again includes is stress relief slits 1108. However, other base configurations may be used, in other examples.

FIGS. 13 shows a method 1300 for operation of a can opening and draining device. The method may be implemented by any of the can opening and draining devices or combinations of the devices discussed herein. It will be understood that the method may be manually implemented by a user of the can opening and draining device.

The method includes at 1302, positioning the base on the can such that the chamfered edge wraps around a flared section at the top of the can and puncturing a lid of a can via depression of the base. Next the method includes at 1304, cutting through the lid using the blade by rotating the base in relation to the can. The base may be rotated in either direction when a doubled sided blade is used in the device. In this way, the lid is efficiently released from the can.

Next the method includes at 1306, mating a lower section of a plunger with an opening in the base. To elaborate, the plunger is mated with the base and then the plunger is pushed further downward to squeeze the liquids from the solid contents of the can. It will be appreciated that, plunger may be initially mated with the base (prior to pressing down the lid) before or subsequent to the step of cutting through the can lid with the blade.

Next the method includes at 1308, pouring liquid from the can through a drain opening that is included in the base. In this way, the can may be drained of unwanted liquid in a controlled manner which reduces the chance of unwanted liquid spills. The method further includes at 1310, removing an assembly of the base, the plunger, and the lid as one unit from the can. The lid is held to the plunger via the magnet. Further, due to the magnetic connection between the lid and the plunger, the plunger is restrained from being decoupled from the base. The method further includes at 1312 removing the lid from the assembly by pulling the plunger upward in relation to the base to release the lid from the magnet. For instance, the lid may be removed from the plunger in this manner over a trash can or a recycling bin to efficiently dispose of the lid with a decreased chance of the user undesirably interacting with a jagged edge of the lid.

In one example, the method may further include, prior to the lid puncturing step or subsequent to the lid removal step, replacing a worn blade that is coupled to the interior of the base with the new blade. In such an example, replacing the worn blade includes unthreading a set screw from the base. However, in other examples, the blade may be removably coupled to the base using another suitable mechanical connection. Further, in one example, when a plug is mated with the base as opposed to the plunger, the lid may be cut by pressing the assembly of the base and the plug onto the can and puncturing the lid via the blade. Next the assembly of the plug and the base is rotated to separate the lid from the base of the can. Method 1300 allows the device to efficiently separate a lid from the can, drain liquid from the can, and dispose of the lid with a decreased chance of user injury, thereby increasing customer appeal.

FIGS. 1A-12 show example configurations with relative positioning of the various components. If elements in FIGS. 1A-12 are shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example.

Note that the example assembly methods included herein can be used with various device configurations. Likewise, please note the order of the method steps is not necessarily required to achieve the features and advantages of the example embodiments described herein, but is provided for ease of illustration and description. One or more of the illustrated actions, operations, and/or functions may be repeatedly performed depending on the particular strategy being used.

The invention will be further described in the following paragraphs. In one aspect, a can opening and draining device is provided that comprises a plunger including a lower section that extends from an upper body and a base with an opening; wherein the lower section is configured to mate with the opening in the base; wherein the base includes: a blade coupled to an interior of the base; and a drain opening that extends through a wall of the base. In one example, the base may include a chamfered edge that is configured to wrap around a flared upper section of a can. In another example the blade is removably coupled to the base. In one example, the can opening and draining device may further include a set screw extending through an opening in the blade and threadingly engaged with the base. In another example, a cutting edge of the blade is recessed from a lower lip of the base. Still further, in another example, the lower section includes two walls which intersect one another. In another example, the can opening and draining device may further include a magnet mated with a recess in the lower section. In another example, the recess may extend into a lower side of the intersection between the two walls. In yet another example, a diameter of the upper body may be greater than a length of the opening in the base. In one example, the can opening and draining device may further comprise a polymeric ring that extends around the interior of the base radially outward from the base. In one example, the can opening and draining device may further comprise a plug including a lower section that sealingly mates with the opening in the base.

In another aspect, a method for operating a can opening and draining device is provided that comprises puncturing a lid of a can via depression of a base, wherein a blade is coupled to an interior of the base; cutting through the lid via the blade by rotating the base in relation to the can; mating a lower section of a plunger with an opening in the base; pouring liquid from the can through a drain opening that is included in the base; and removing an assembly of the base, the plunger, and the lid from the can. The method may further comprise, in one example, removing the lid from the assembly via pulling the plunger from the base. The method may further comprise, in another example, prior to puncturing the lid of the can, replacing a worn blade that is coupled to the interior of the base with the new blade. Still further, in one example, replacing the worn blade includes unthreaded a set screw from the base.

In another aspect, a can opening and draining device is provided that comprises a plunger and/or a plug that includes a lower section that extends from an upper body and a base with an opening; wherein the lower section is configured to mate with the opening in a central section of the base; wherein the base includes: a blade coupled to an interior of the base; and a drain opening that extends through a circumferential section of a wall of the base; wherein the plunger is configured to move in opposing directions through the opening of the base; and wherein the plug is configured to seal the opening of the base. In one example, the blade may be removably coupled to the base via a set screw; and a cutting edge of the blade may be recessed from a lower lip of the base. Further in one example, the base may include a chamfered edge that may be configured to wrap around a flared upper section a can. In one example, the can opening and draining device may further include a magnet coupled to a lower surface of the plunger; and/or silicone ring circumferentially extending around an inner surface of the base above the chamfered edge.

It will be appreciated that the device configurations and routines disclosed herein are exemplary in nature, and that these specific embodiments are not to be considered in a limiting sense, because numerous variations are possible.

FIGS. 1A-12 are shown approximately to scale. However, the components may have alternate relative dimensions, in other embodiments. As used herein, the term "approximately" is construed to mean plus or minus five percent of the range unless otherwise specified.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A can opening and draining device, comprising:
a plunger including a lower section that extends from an upper body; and
a base including an opening;
wherein the lower section is configured to mate with the opening in the base; and
wherein the base includes:
a blade coupled to an interior of the base; and
a drain opening that extends through a wall of the base.

2. The can opening and draining device of claim 1, wherein the base includes a chamfered edge that is configured to wrap around a flared upper section of a can.

3. The can opening and draining device of claim 1, wherein the blade is removably coupled to the base.

4. The can opening and draining device of claim 3, further comprising a set screw extending through an opening in the blade and threadingly engaged with the base.

5. The can opening and draining device of claim 1, wherein a cutting edge of the blade is recessed from a lower lip of the base.

6. The can opening and draining device of claim 1, wherein the lower section includes two walls which intersect one another.

7. The can opening and draining device of claim 6, further comprising a magnet coupled to the lower section.

8. The can opening and draining device of claim 7, wherein the magnet is coupled to a lower side of an intersection between the two walls.

9. The can opening and draining device of claim 1, further comprising a polymeric ring that extends around the interior of the base radially outward from the base.

10. The can opening and draining device of claim 9, wherein the polymeric ring is constructed out of silicone.

11. The can opening and draining device of claim 1, further comprising a plug including a lower section that sealingly mates with the opening in the base.

12. A method for operating a can opening and draining device, comprising:
puncturing a lid of a can via depression of a base, wherein a blade is coupled to an interior of the base;
cutting through the lid via the blade by rotating the base in relation to the can;
mating a lower section of a plunger with an opening in the base;
pouring liquid from the can through a drain opening that is included in the base; and
removing an assembly of the base, the plunger, and the lid from the can.

13. The method of claim 12, further comprising removing the lid from the assembly via pulling the plunger from the base.

14. The method of claim 12, further comprising prior to puncturing the lid of the can, replacing a worn blade that is coupled to the interior of the base with the blade.

15. The method of claim 14, wherein replacing the worn blade includes unthreaded a set screw from the base.
